Europäisches Patentamt

European Patent Office

Office européen des brevets

(11) Publication number: **0 310 342 B1**

(12) **EUROPEAN PATENT SPECIFICATION**

(45) Date of publication of patent specification: **09.12.92**    (51) Int. Cl.⁵: **C04B 35/80**, C04B 35/10

(21) Application number: **88308958.3**

(22) Date of filing: **28.09.88**

(54) **SiC-Al2O3 composite sintered bodies and method of producing the same.**

(30) Priority: **30.09.87 JP 244158/87**

(43) Date of publication of application:
**05.04.89 Bulletin 89/14**

(45) Publication of the grant of the patent:
**09.12.92 Bulletin 92/50**

(84) Designated Contracting States:
**DE FR GB**

(56) References cited:
**EP-A- 0 193 292**
**DE-A- 3 616 572**

**AMERICAN CERAMIC SOCIETY BULLETIN,**
**vol. 64, no. 2, 1985, pages 298-304, Colum-**
**bus, Ohio, US; G.C. WEI et al.: "Development**
**of SiC-whisker-reinforced ceramics"**

(73) Proprietor: **NGK INSULATORS, LTD.**
**2-56, Suda-cho, Mizuho-ku**
**Nagoya City Aichi Pref.(JP)**

Proprietor: **Niihara, Koichi**
**1-2-2, Hashirimizu-Shukusha Boei University**
**25, Hashirimizu 2-chome**
**Yokosuka City Kanagawa Prefecture(JP)**

(72) Inventor: **Niihara, Koichi 1-2-2 Hashirimizu-**
**Shukusha**
**Boei University 25, Hashirimizu 2-Chome**
**Yokosuka City Kanagawa Pref.(JP)**
Inventor: **Nakahira, Atsushi 407 Dokushin-Ryo**
**Boei University,10-20 Hashirimizu 1-Chome**
**Yokosuka City Kanagawa Pref.(JP)**

(74) Representative: **Paget, Hugh Charles Edward**
**et al**
**MEWBURN ELLIS & CO. 2/3 Cursitor Street**
**London EC4A 1BO(GB)**

EP 0 310 342 B1

## Description

This invention relates to $SiC$-$Al_2O_3$ composite sintered bodies and a method of producing the same, and more particularly to $SiC$-$Al_2O_3$ composite sintered bodies suitable for use in structural materials having high strength and toughness and a method of producing the same.

$Al_2O_3$ is widely used as a substrate or a package for an integrated circuit, a chip for cutting tool or a refractory material. However, the strength and toughness of $Al_2O_3$ are low as compared with those of a silicon nitride sintered body, so that there is a restriction in its use as a structural material for engine parts and the like.

In order to increase the strength and toughness of $Al_2O_3$, it is known to disperse $SiC$ particles or $SiC$ whiskers into $Al_2O_3$. For example, the increase of the toughness in the $Al_2O_3$ sintered body through the dispersion of $SiC$ whiskers is disclosed in American Ceramics Society Bulletin, 64 [2], 298-304 (1985). Furthermore, the increase of the strength, toughness and hardness and the improvement of high temperature properties in the $Al_2O_3$ sintered body through the dispersion of $SiC$ particles is disclosed in JP-A-59-3,766, JP-A-61-21,964 and JP-A-61-174,165.

However, when only $SiC$ whiskers is dispersed into $Al_2O_3$, the sinterability of $Al_2O_3$ is considerably reduced, and also firing at a high temperature for a long time is required for densification. $Al_2O_3$ particles grow in the $Al_2O_3$ sintered body to increase the toughness, but the strength is undesirably lowered. On the other hand, the dispersion of $SiC$ particles cannot increase the toughness as compared with the case of dispersing $SiC$ whiskers.

DE-A-3 616 572 is concerned with the production of sintered bodies consisting of alumina, zirconia and silicon carbide. Use of particles and whiskers of silicon carbide is discussed.

It is an object of the invention to solve the aforementioned drawbacks of the prior art. The invention is set out in claim 1.

The invention can provide an $Al_2O_3$ sintered body containing $SiC$ whiskers and $SiC$ particles, with the suppression of growth of $Al_2O_3$ particles and increase of toughness without lowering of strength

The invention in another aspect is set out in claim 5.

The invention will be described and illustrated with reference to the accompanying drawings, wherein:

Fig. 1 is a microphotograph showing a particle structure of $SiC$ whiskers;

Fig. 2 is a microphotograph showing a particle structure of an $SiC$-$Al_2O_3$ composite sintered body according to the invention; and

Fig. 3 is a graph showing temperature change of strength in Example 1 of an $SiC$-$Al_2O_3$ composite sintered body according to the invention.

In the $SiC$-$Al_2O_3$ composite sintered body according to the invention, $SiC$ particles or $SiC$ whiskers are present in the grain boundary of $\alpha$-$Al_2O_3$ particles or in the particles. The amount of $SiC$ particles included in the sintered body is 2-20 mol%, because when this amount is less than 2 mol%, the microstructure of $Al_2O_3$ particles such as particle size or the like can not be controlled during the sintering and the particle size of $Al_2O_3$ particles becomes large, reducing the strength of the sintered body, while when it exceeds 20 mol%, the densification of $Al_2O_3$ is obstructed during the sintering and a dense sintered body can not be obtained. Preferably, the amount of $SiC$ particles is 5-10 mol%. On the other hand, the amount of $SiC$ whiskers is 2-20 mol%, because when this amount is less than 2 mol%, the distribution of $SiC$ whiskers in the sintered body is insufficient to hinder cracking and the effect of increasing the toughness is substantially zero, while when it exceeds 20 mol%, the densification of $Al_2O_3$ is obstructed and a dense sintered body is not obtained. Preferably, it is 5-15 mol%.

The particle sizes of $\alpha$-$Al_2O_3$ particles and $SiC$ particles and the short size and aspect ratio of $SiC$ whisker are determined by observing the microstructure of cut surface, polished surface and etched surface in the $SiC$-$Al_2O_3$ composite sintered body. The particle size of $SiC$ particles is not more than 1 $\mu$m, because when it exceeds 1 $\mu$m, if $SiC$ particles are large in the starting material, the densification of $Al_2O_3$ is obstructed and a dense sintered body is not obtained, or if $SiC$ particles grow large during the sintering, $Al_2O_3$ particles also grow in the sintering, reducing the strength of the sintered body. On the other hand, the $SiC$ whiskers must have a short size of 0.5-5 $\mu$m and an aspect ratio of not less than 3. When the short size is less than 0.5 $\mu$m, the action of the whiskers in preventing the crack growth in the breakage of the sintered body is lost and the toughness is not increased, while when it exceeds 5 $\mu$m, the densification of $Al_2O_3$ is obstructed and a dense sintered body is not obtained, or the whisker itself acts as a breakage source to lower the strength of the sintered body. Further, when the aspect ratio is less than 3, the action of the whiskers in preventing the crack growth in the breakage of the sintered body is lost and the toughness is not increased. Preferably, the short size and the aspect ratio are 1-5 $\mu$m and not less than 3.

In the $SiC$-$Al_2O_3$ composite sintered body according to the invention, the toughness is increased without lowering of the strength by the action of SiC whiskers preventing the crack growth in breakage and the action of microstructure control owing to the presence of SiC particles during the sintering.

The production of the SiC-Al$_2$O$_3$ composite sintered body according to the invention will be discussed in detail below, by way of example.

The particle size of Al$_2$O$_3$ powder as a starting material is preferably not more than 2 $\mu$m as a size corresponding to specific surface area. When it exceeds 2 $\mu$m, the sinterability is poor and the densification is difficult, and if it is intended to conduct the densification at a high temperature, Al$_2$O$_3$ particles grow in the sintered body to lower the strength of the sintered body. Preferably, the particle size of Al$_2$O$_3$ is not more than 0.5 $\mu$m. As the starting Al$_2$O$_3$ powder, $\gamma$-Al$_2$O$_3$ or the like may be used if it is converted into $\alpha$-Al$_2$O$_3$ after the firing. The Al$_2$O$_3$ powder is preferred to have a high purity because the impurity particularly degrades the high temperature properties. Particularly, it is favorable to use Al$_2$O$_3$ powder having a purity of not less than 99%.

The particle size of the SiC particles is preferred to be not more than 0.5 $\mu$m as a size corresponding to specific surface area. When it exceeds 0.5 $\mu$m, SiC particles do not sufficiently disperse into Al$_2$O$_3$ particles and the microstructure such as the particle size of Al$_2$O$_3$ particle or the like during the sintering cannot be controlled and consequently the strength of the resulting sintered body is reduced. Particularly, the particle size of SiC particle is preferred to be not more than 0.2 $\mu$m. Further, SiC particle may be of $\alpha$ type or $\beta$ type.

The short size and aspect ratio of SiC whiskers are measured by a scanning type electron microscope and are preferred to be 0.5-5 $\mu$m and not less than 3, respectively, because SiC whiskers do not easily grow during the sintering. Particularly, the SiC whiskers are preferred have a short size of 1-5 $\mu$m and an aspect ratio of not less than 3.

The SiC particles or SiC whiskers are preferred to have a high purity because impurity particularly degrades the high temperature properties. Preferably, SiC particles contain metal impurity of not more than 1% and oxygen of not more than 1%. Moreover, SiO$_2$ or the like inevitably included in SiC particles or SiC whiskers may form a different phase in the grain boundary between $\alpha$-Al$_2$O$_3$ particles or the like.

The above Al$_2$O$_3$ powder, SiC particles and SiC whisker are mixed to obtain a mixed powder for shaping. The mixing is a wet or dry type carried out by means of a ball mill or the like. Since the oxidation of SiC particles or SiC whiskers, or the breakage of SiC whiskers may be caused during the mixing, the mixing process must be determined while observing the state of the mixed powder. As the mixing process, Al$_2$O$_3$ powder is throughly mixed with SiC particles and then mixed with SiC whiskers under a relatively non-pulverizing condition. The resulting mixed powder is shaped into a desired form by dry pressing, injection molding or the like. Moreover, SiC whiskers can be oriented during the shaping to give an anisotropy inherent to the shape.

The shaped body made from the mixed powder of Al$_2$O$_3$ powder, SiC particles and SiC whiskers is densified by pressureless sintering, hot pressing, hot isostatic pressing (HIP) or the like. In this case, it is necessary to set the firing conditions so that the particle size of SiC particles is not more than 1 $\mu$m, the short size and aspect ratio of SiC whiskers are 0.5-5 $\mu$m and not less than 3, respectively, and the particle size of $\alpha$-Al$_2$O$_3$ particles is not more than 5 $\mu$m in the resulting sintered body. For this purpose, the firing temperature is 1,400-1,800°C. When the firing temperature is lower than 1,400°C, the densification is insufficient, while when it is higher than 1,800°C, the growth of Al$_2$O$_3$ particles and SiC particles and the reaction between Al$_2$O$_3$ and SiC are caused and consequently the SiC-Al$_2$O$_3$ composite sintered body consisting of Al$_2$O$_3$ particle as a matrix and SiC particles and SiC whiskers dispersed according to the invention can not be obtained.

The firing atmosphere may be an inert atmosphere such as nitrogen, argon or the like, or a reducing atmosphere such as hydrogen or the like for preventing the oxidation of SiC particles and SiC whiskers. Moreover, the SiC whiskers can be oriented to give an anisotropy to the sintered body by the hot pressing. As the hot isostatic pressing, there may be performed a method wherein a presintered body having less open pore is previously produced by the pressureless pressing or the hot pressing and then subjected to the hot isostatic pressing, or a method wherein the shaped body is airtightly sealed with a metal, glass or the like and then subjected to the hot isostatic pressing.

The following examples are given in illustration of the invention and are not intended as limitations thereof.

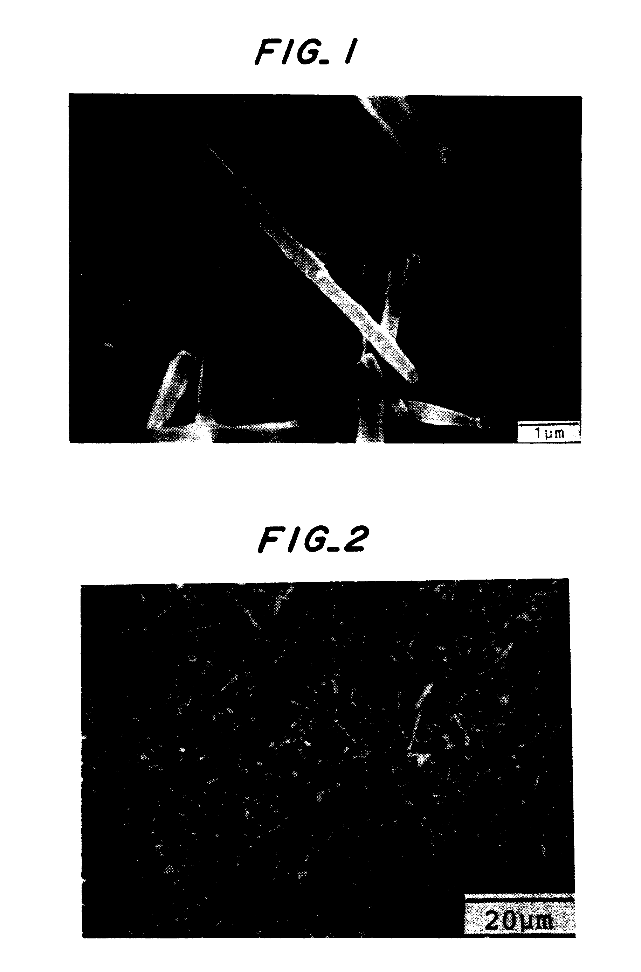

$\alpha$-Al$_2$O$_3$ powder having an average particle size of 0.2 $\mu$m and a purity of 99.9%, $\beta$-SiC particles having an average particle size of 0.2 $\mu$m and a purity of 98%, and SiC whiskers having a short size of 0.1-2 $\mu$m, an aspect ratio of not less than 5 and a purity of 97% were mixed at a mixing ratio as shown in the following Table 1 in a polyethylene container containing iron balls each coated with polyethylene under a wet state of acetone for 10 hours. A scanning type electron microphotograph of the SiC whisker is shown in Fig. 1. The thus obtained mixed powder was previously shaped into a size of 50 mm in diameter and 10 mm in thickness and pressed under a pressure of 200 MPa. Then, the shaped body was hot pressed at a temperature shown in Table 1 under a pressure of 30 MPa to obtain SiC-Al$_2$O$_3$ composite sintered bodies of Examples 1-5 according to the invention. Further, the same procedure as mentioned above was repeated except that the mixing ratio was outside the range defined in the invention to obtain the composite sintered bodies of Comparative Examples 6-9. All of these sintered bodies had a porosity of not more than 1% and were dense.

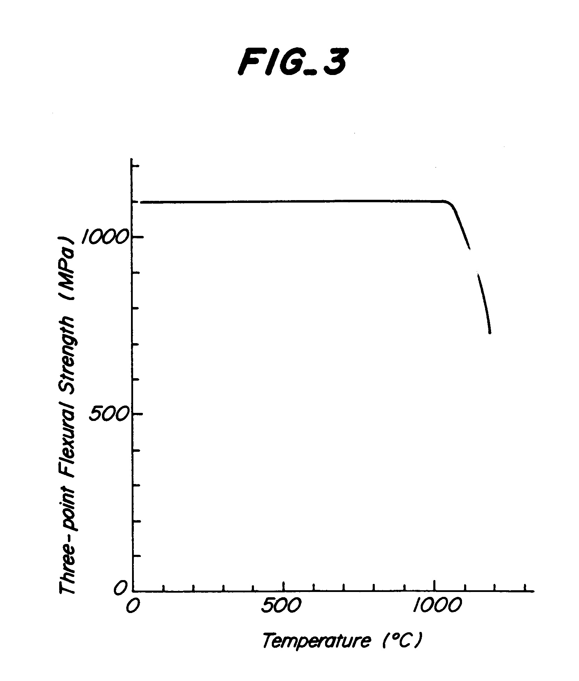

In Examples 1-5 and Comparative Examples 6-9, the composition of the sintered body was coincident with that of the mixed powder as a result of testing of crystal quantification through chemical analysis and X-ray diffraction. An optical microphotograph of the polished surface of the sintered body in Example 1 is shown in Fig. 2, wherein a white portion is SiC particle or SiC whisker and a black portion is Al$_2$O$_3$ matrix. The particle size of Al$_2$O$_3$ particles and SiC particles in Examples 1-5 and Comparative Examples 6-9 was measured by optical microscope and scanning type electron microscope to obtain results as shown in Table 1. Moreover, the short size and aspect ratio of SiC whiskers in the sintered body were the same as in the starting SiC whiskers.

Furthermore, In Examples 1-5 and Comparative Examples 6-9, the three-point flexural strength at room temperature was measured according to the method of JIS R1601 and the fracture toughness value ($K_{IC}$) was measured according to an indentation fracture method to obtain results as shown in Table 1. Moreover, Fig. 3 shows the temperature change of three-point flexural strength in the sintered body of Example 1 when this strength was measured over a temperature range of from room temperature to 1,400°C.

Table 1

|  | No. | Composition of mixed powder (mol%) | | | Firing temperature (°C) | Particle size of sintered body (μm) | | Three-point flexural strength (MPa) | KIC (MPam$^{0.5}$) |
|---|---|---|---|---|---|---|---|---|---|
|  |  | α-Al$_2$O$_3$ | SiC particle | SiC whisker |  | Al$_2$O$_3$ particle | SiC particle |  |  |
| Example | 1 | 80 | 10 | 10 | 1600 | <3 | <0.5 | 1100 | 5.8 |
|  | 2 | 78 | 2 | 20 | 1600 | <5 | <0.5 | 1030 | 5.3 |
|  | 3 | 78 | 20 | 2 | 1700 | <3 | <0.5 | 980 | 5.4 |
|  | 4 | 80 | 5 | 15 | 1800 | <4 | <0.5 | 1060 | 5.7 |
|  | 5 | 85 | 10 | 5 | 1400 | <3 | <0.5 | 1080 | 5.9 |
| Comparative Example | 6 | 84 | 1 | 15 | 1500 | <12 | <1.2 | 420 | 5.4 |
|  | 7 | 89 | 10 | 1 | 1800 | <3 | <0.5 | 650 | 4.5 |
|  | 8 | 70 | 5 | 25 | 1400 | <3 | <0.5 | 550 | 5.6 |
|  | 9 | 70 | 25 | 5 | 1500 | <3 | <0.5 | 720 | 4.2 |

As seen from the above results, the SiC-Al$_2$O$_3$ composite sintered bodies according to the invention have a three-point flexural strength of not less than 980 MPa and a toughness K$_{IC}$ of not less than 5.3 MPam$^{0.5}$, which are higher than those of the comparative examples, and are excellent in high temperature properties up to 1,000°C.

As mentioned above, the exemplary SiC-Al$_2$O$_3$ composite sintered bodies according to the invention

5

have a strength of not less than 980 MPa and $K_{IC}$ of not less than 5.3 MPam$^{0.5}$ due to the action of SiC whisker preventing crack growth in the breakage of the sintered body and the action of SiC particle controlling the microstructure in the sintering and are suitable as a structural material. Furthermore, they are applicable to a high-temperature structural material such as engine parts or the like because they are excellent in high temperature properties up to 1,000°C.

**Claims**

1. A composite sintered body consisting of $Al_2O_3$ and SiC having a matrix consisting of $\alpha$-$Al_2O_3$ particles having a particle size of not more than 5 $\mu$m, wherein the SiC content of the sintered body consists of 2-20 mol% of SiC particles having a particle size of not more than 1 $\mu$m and 2-20 mol% of SiC whiskers having a short size of 0.5-5 $\mu$m and an aspect ratio of not less than 3, said SiC particles and whiskers being dispersed in said matrix.

2. A composite sintered body according to claim 1, wherein the amount of said SiC particles is 5-10 mol%.

3. A composite sintered body according to claim 1 or 2 wherein the amount of said SiC whiskers is 5-15 mol%.

4. A composite sintered body according to any one of claims 1 to 3, wherein said SiC whisker has a short size of 1-5 $\mu$m.

5. A method of producing a composite sintered body consisting of $Al_2O_3$ and SiC, which comprises shaping a mixed powder consisting of 2-20 mol% of SiC particles having a particle size of not more than 1 $\mu$m, 2-20 mol% of SiC whiskers having a short size of 0.5-5 $\mu$m and an aspect ratio of not less than 3, and the remainder $Al_2O_3$ powder having a particle size of not more than 2 $\mu$m, and then sintering the shaped mixture at 1400-1800°C.

6. A method according to claim 5, wherein said $Al_2O_3$ powder has a purity of not less than 99%.

**Patentansprüche**

1. Gesinterter Verbundkörper bestehend aus $Al_2O_3$ und SiC, mit einer Matrix bestehend aus $\alpha$-$Al_2O_3$-Teilchen, die eine Teilchengröße von nicht mehr als 5 $\mu$m aufweisen, worin der SiC-Gehalt des gesinterten Körpers aus 2-20 Mol-% SiC-Teilchen mit einer Teilchengröße von nicht mehr als 1 $\mu$m und 2-20 Mol-% SiC-Whiskers mit einer Dicke von 0,5-5 $\mu$m und einem Längen/Dicken-Verhältnis von nicht weniger als 3 aufweisen, und die SiC-Teilchen und Whiskers in der Matrix dispergiert sind.

2. Gesinterter Verbundkörper gemäß Anspruch 1, worin die Menge besagter SiC-Teilchen 5-10 Mol-% beträgt.

3. Gesinterter Verbundkörper gemäß Anspruch 1 oder 2, worin die Menge der SiC-Whiskers 5-15 Mol-% beträgt.

4. Gesinterter Verbundkörper gemäß einem der Ansprüche 1 bis 3, worin der SiC-Whisker eine Dicke von 1-5 $\mu$m aufweist.

5. Verfahren zur Herstellung eines gesinterten Verbundkörpers, bestehend aus $Al_2O_3$ und SiC, das das Formen eines Pulvergemisches bestehend aus 2-20 Mol-% SiC-Teilchen mit einer Teilchengröße von nicht mehr als 1 $\mu$m, 2-20 Mol-% SiC-Fasern mit einer Dicke von 0,5-5 $\mu$m und einem Längen/Dicken-Verhältnis von nicht weniger als 3, und Rest $Al_2O_3$-Pulver einer Teilchengröße von nicht mehr als 2 $\mu$m, und dann das Sintern der geformten Mischung bei 1400-1800°C umfasst.

6. Verfahren gemäß Anspruch 5, bei dem das $Al_2O_3$-Pulver eine Reinheit von nicht weniger als 99% aufweist.

**Revendications**

1. Corps composite fritté consistant en $Al_2O_3$ et SiC ayant une matrice consistant en particules de $\alpha$-$Al_2O_3$ ayant une taille de particules de pas plus de 5 $\mu$m où la teneur en SiC du corps fritté se compose de 2-20% en moles des particules de SiC ayant une taille de particules de pas plus de 1 $\mu$m et 2-20% en moles de barbes de SiC ayant une courte taille de 0,5-5 $\mu$m et un rapport d'aspect de pas moins de 3, lesdites particules et barbes de SiC étant dispersées dans ladite matrice.

2. Corps composite fritté selon la revendication 1 où la quantité desdites particules de SiC est de 5-10% en moles.

3. Corps composite fritté selon la revendication 1 ou 2, où la quantité desdites barbes de SiC est de 5-15% en moles.

4. Corps composite fritté selon l'une quelconque des revendications 1 à 3, où ladite barbe de SiC a une courte taille de 1-5 $\mu$m.

5. Méthode de fabrication d'un corps composite fritté consistant en $Al_2O_3$ et SiC qui comprend la mise en forme d'une poudre mélangée consistant en 2-20% en modes de particules de SiC ayant une taille de particules de plus de 1 $\mu$m, 2-20% en moles de barbes de SiC ayant une courte taille de 0,5-5 $\mu$m et un rapport d'aspect de pas moins de 3, le restant étant de la poudre de $Al_2O_3$ ayant une taille de particules de pas plus de 2 $\mu$m, et le frittage du mélange en forme à 1400-1800°C.

6. Méthode selon la revendication 5, où ladite poudre de $Al_2O_3$ a une pureté qui n'est pas inférieure à 99%.

## FIG. 1

1 µm

## FIG. 2

20µm

8

# FIG_3